# EUROPEAN PATENT SPECIFICATION

(11) **EP 1 782 947 B1**
(45) Date of publication and mention of the grant of the patent: **21.10.2009**
(21) Application number: 05077533.7
(22) Date of filing: 07.11.2005
(51) Int. Cl.: B32B 27/36

(54) **Multilayer polymeric product based on polyethylene terephthalate and polycarbonate and its use as a building material**
Mehrschichtige Produkte auf Basis von Polyethylenterephthalat und Polycarbonat und deren Verwendung als Baustoffe
Matériaux multicouches à base de polyéthylène terephthalate et de polycarbonate et leur utilisation comme matériaux de construction

(43) Date of publication of application: 09.05.2007
(73) Proprietor: Politec Polimeri Tecnici S.A., 6855 Stabio (CH)
(72) Inventor: Conterno, Cosimo, 6850 Mendrisio (CH)
(74) Representative: De Gregori, Antonella

(56) References cited:
- EP-A- 0 270 374
- EP-A- 1 285 863
- EP-A- 1 510 552
- US-A1- 2003 152 775
- PATENT ABSTRACTS OF JAPAN vol. 1995, no. 05, 30 June 1995 (1995-06-30) & JP 07 032560 A (MITSUBISHI PLASTICS IND LTD), 3 February 1995 (1995-02-03)
- PATENT ABSTRACTS OF JAPAN vol. 2003, no. 12, 5 December 2003 (2003-12-05) & JP 2005 178063 A (TEIJIN CHEM LTD), 7 July 2005 (2005-07-07)
- PATENT ABSTRACTS OF JAPAN vol. 1999, no. 08, 30 June 1999 (1999-06-30) & JP 11 077938 A (DENKI KAGAKU KOGYO KK; DENKA KAKO KK), 23 March 1999 (1999-03-23)

## Description

The present invention relates to a multilayer polymeric product based on polyethylene terephthalate and polycarbonate, its relative use as a building material and the process for the production of the product itself.

As far as the product is concerned, the objective of the present invention is to find an alternative material to polyvinylchloride (PVC) or PMMA in the building industry and glass resin.

Polyethylene terephthalate (PET) is widely used in the production of all kinds of containers, in particular, bottles, extruded film products and sheets for applications in packaging and thermoforming. In its use as a building material, however, PET has various significant disadvantages substantially due to its poor thermal stability and low resistance to hydrolysis.

It has a low softening point and temperatures around 55°C are in fact sufficient for softening PET (Vicat softening temperature: Method B50: 75°C according to the regulation ISO 306). This limit obviously greatly interferes with the use of PET-based structures in the building industry as the high outside temperatures in the summer can reach values, such as those indicated above, in correspondence, for example, with connections with metallic profiles, such as aluminum.

The state of the art has therefore attempted to solve this problem by modifying the properties of PET (see patents such as EP152825, DE2917395, US4226961, EP270374, DE2647565, NL7903118), by the addition to PET, for example, of polyethylene naphthalate (PEN) or polycarbonates (PC), in the presence of special additives.

Polycarbonate is in fact characterized by a vicat softening temperature equal to 156°C. It is a material widely used in the building industry, is versatile, with an excellent dimensional stability, extremely resistant, with a good processability, relatively resistant to scratches, with excellent optical properties and UV stability.

Unfortunately, however, PC is an extremely expensive material and this prevents it from being more widely used in the building industry. Furthermore, it has a low resistance to solvents and to some chemical additives.

The multilayer polymeric product according to the present invention allows the drawbacks which characterized the known art to be overcome.

In particular, the objective of the present invention is consequently to provide a multilayer polymeric product which has a thermal resistance as close as possible to that of PC, which guarantees a greater resistance to chemical agents and which, at the same time, has a much lower cost than that of PC, and therefore compatible with use in the building industry, thus overcoming the limits which characterize the known art, obtaining, in our case, an increase in resistance to chemical agents with respect to PC.

An object of the present invention relates to a multilayer polymeric product which consists of a coextruded internal central layer, of polyethylene terephthalate (PET) copolymer, in a quantity ranging from 80 to 90% by weight with respect to the total weight of the internal layer, mixed with polycarbonate (PC), in a quantity ranging from 10 to 20% by weight with respect to the total weight of the layer, and outer, side layers, of a blend of PET, in a quantity ranging from 15 to 25% by weight with respect to the total weight of the outer layers, and PC, in a quantity ranging from 75 to 85% by weight with respect to the total weight of said outer layers.

The outer layers are an upper layer and a lower layer with respect to the central layer.

The multilayer polymeric product, object of the present patent can have a honeycomb structure or a compact or corrugated structure, as indicated below.

In a particular embodiment, the multilayer polymeric product according to the present invention can be made up of 4 (four) layers, an internal central layer, two outer side layers and an overall outer layer for the whole system containing a specific UV protection.

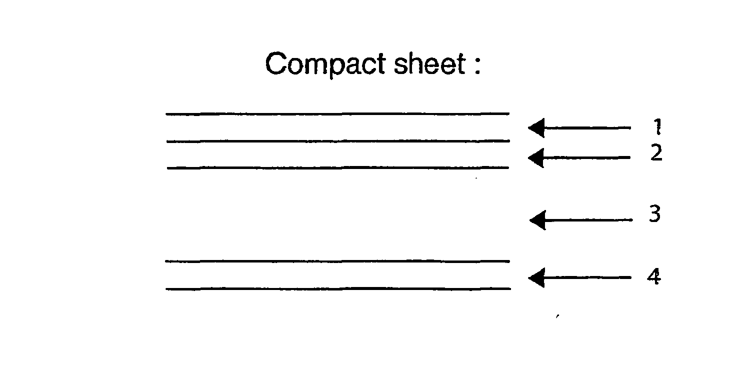

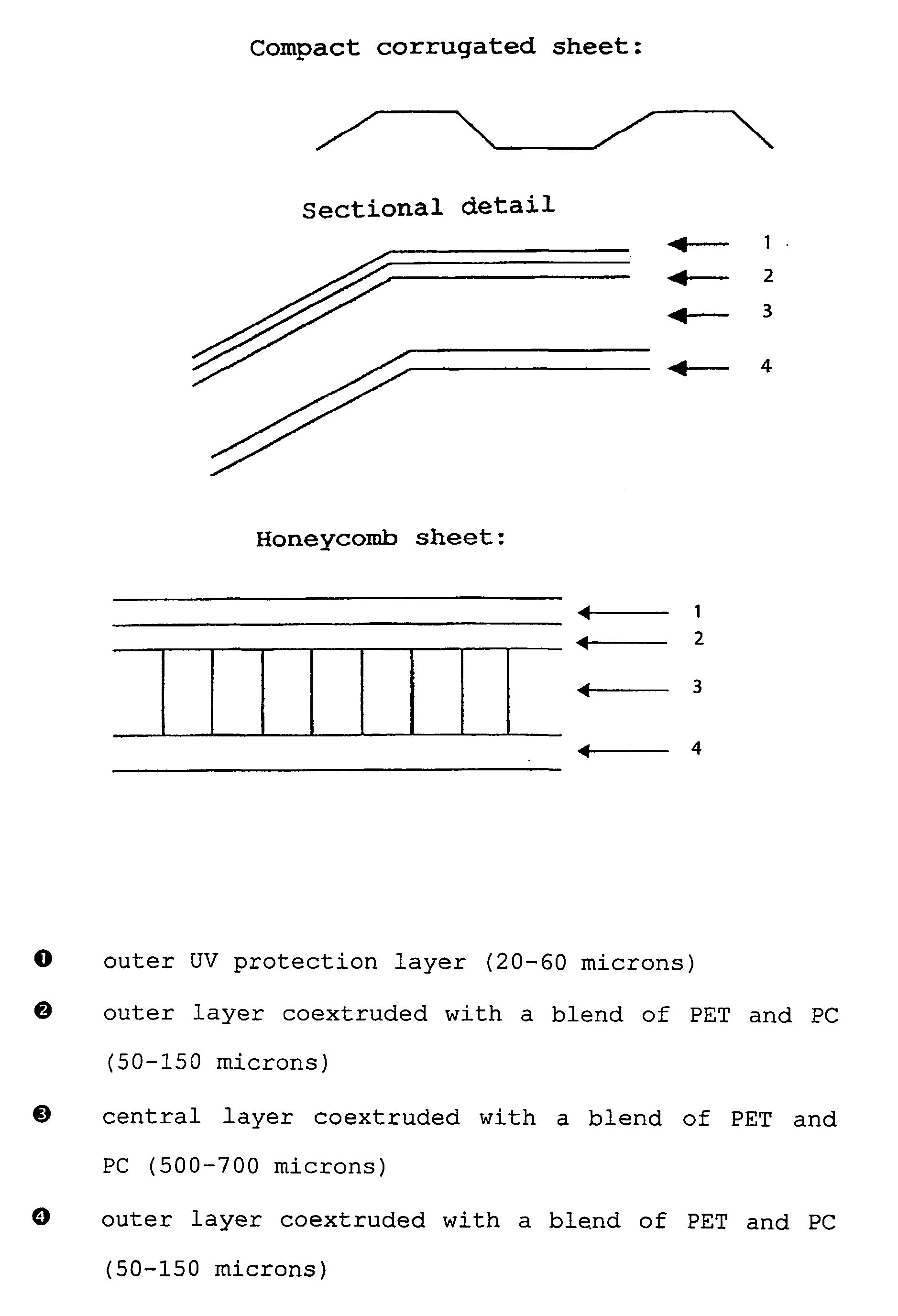

The internal central layer is preferably a blend of PET, in a quantity equal to 90% by weight with respect to the total weight of said layer, and PC, in a quantity equal to 10% by weight with respect to the total weight of said layer, and the two outer side layers are a blend of PET, in a quantity equal to 20% by weight with respect to the total weight of the two outer layers, and PC, in a quantity equal to 80% by weight with respect to the total weight of said layers.

In particular, the central layer has a thickness from five to seven times the thickness of the outer layer, preferably a thickness equal to six times the thickness of the outer layer.

A further object of the present invention relates to a process for the production of a multilayer polymeric product which consists in a coextruded internal central layer of polyethylene terephthalate (PET) copolymer, in a quantity ranging from 80 to 90% by weight with respect to the total weight of the internal layer, mixed with polycarbonate (PC), in a quantity ranging from 10 to 20% by weight with respect to the total weight of the layer, and outer, side layers, of a blend of PET, in a quantity ranging from 15 to 25% by weight with respect to the total weight of the outer layers, and PC, in a quantity ranging from 75 to 85% by weight with respect to the total weight of said outer layers, said process comprising the following phases:
i) the PET, possibly containing additives, is subjected to drying and regradation;
ii) the PC, possibly containing additives, is subjected to drying;
iii) the PC/PET blend, possibly containing additives, is subjected to drying;
iv) PET and PC are subjected to blending at a temperature ranging from 80 to 140°C;
v) the blended product is charged into the main extruder and extrusion is effected of the internal layer at a pressure ranging from 70 to 450 atm and a temperature ranging from 250 to 350°C;
vi) the blend coming from phase iii) is extruded to give the two outer layers;
vii) the three layers coming from phases v) and vi) converge in a coextruder where they are coextruded at an increasing pressure from 70 to 450 atm and a temperature varying from 230 to 270°C and then stabilized;
viii) the multilayer product coming from phase vii) is subjected to calendering and thermoforming with by-step thermal cycles within a range of 10 to 140°C.

A further object of the present invention also relates to the use as a building material of a multilayer polymeric product which consists in a coextruded internal central layer of polyethylene terephthalate (PET) copolymer, in a quantity ranging from 80 to 90% by weight with respect to the total weight of the internal layer, mixed with polycarbonate (PC), in a quantity ranging from 10 to 20% by weight with respect to the total weight of the layer, and outer, side layers, of a blend of PET, in a quantity ranging from 15 to 25% by weight with respect to the total weight of the outer layers, and PC, in a quantity ranging from 75 to 85% by weight with respect to the total weight of said outer layers.

The product has an overall quantity of PC equal to 10-20% of the total weight of the product.

A first important advantage of the product and process according to the present invention consists in the production of said product by means of an integrated production process, wherein all the production phases are carried out on line and in continuous. This process guarantees a reduction in the production costs and, contemporaneously, an increase in the intrinsic quality of the product.

Thanks to the production process according to the present invention, an increase in the technical characteristics and mechanical resistance of the product are obtained, even in the presence of a reduced percentage of PC (within 10-20% of the total weight of the product) with respect to the quantity of PC necessary for obtaining the same performances, adopting traditional production systems.

Furthermore, the production process according to the present invention allows PC and PET to be combined without the use of additives or compacting agents, but adopting a process in continuous, the application of different temperature sequences in the various production cycles (from 80 to 350°C) and different section pressures ranging from 250 to 450 atm. The above process in particular envisages the application of the above "By-step" temperatures and pressures, i.e. not in continuous.

A fundamental advantage of the multilayer polymeric product according to the present invention is that it has a thermal stability comparable to that of PVC, PMMA, having the advantage however of guaranteeing a greater flame resistance; in the case of combustion, an inflow of non-harmful fumes and a greater mechanical resistance to high and low temperatures. The internal layer is in fact already stable to temperatures in the order of 70°C and is further protected by the outer layers, richer in PC, which are stable up to temperatures in the order of 110-120°C.

A further advantage of the multilayer polymeric product according to the present invention consists in the high compatibility between the outer layers and the internal layer: this compatibility makes the structure extremely solid, making detachment between the central internal layer and outer side layers, practically impossible.

Another important advantage of the multilayer polymeric product according to the present invention is the following. Due to the particular process used in the production of the multilayer polymeric product, there is a bleeding effect of the PC: i.e. a gradual variation takes place in the concentration of the PC in the transition areas between the internal layer, which is less rich in PC, and the outer layers, richer in PC.

This gradual variation in the concentration of the PC also causes a gradual variation in the temperature resistance in the transition areas between the internal layer, which is less rich in PC, and the outer layers, richer in PC. This therefore creates a high elasticity of the multilayer polymeric product according to the present invention.

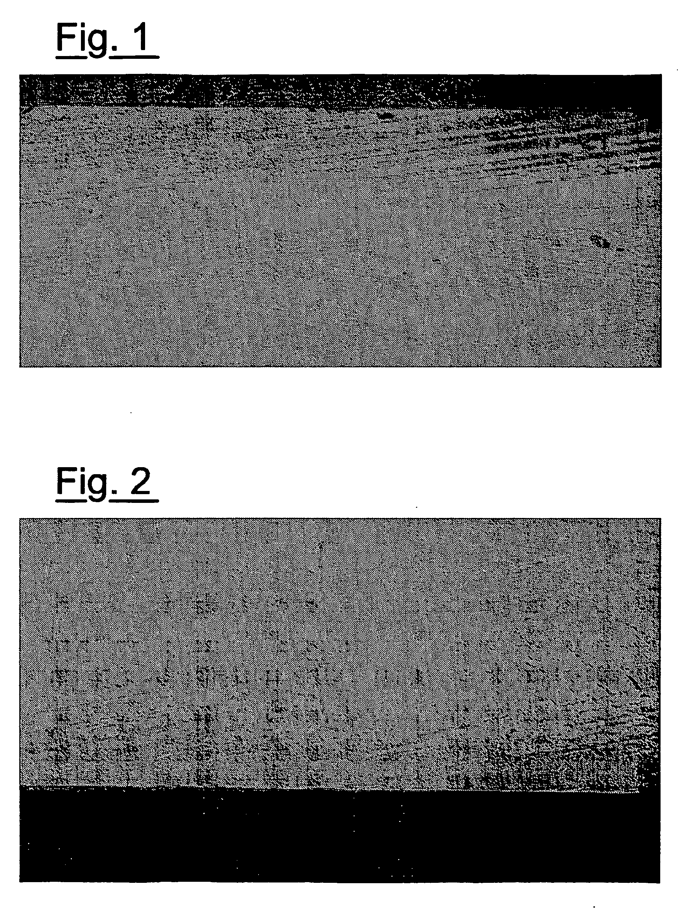

This effect is clearly visible in figures 1 and 2 which are a photograph of the multilayer polymeric product according to the present invention. Figure 1 shows the central internal layer and the upper outer layer (darker), figure 2 shows the central internal layer and the lower outer layer (darker).

In both figures, in fact, the darker area is the outer layer richer in PC, whereas the lighter area corresponds to the central internal layer, less rich in PC. An intermediate-coloured transition area can be clearly seen, where there is the bleeding effect of the PC between the light area and the dark area.

Furthermore, the multilayer polymeric product according to the present invention does not require preparation of the blends in mass, as described in all the documents of the known art (for example in patents EP152825, DE2917395, US4226961, EP270374, DE2647565, NL7903118), which would require the use of extremely complex equipment. In the process according to the present invention, in fact, it is not necessary to effect a pre-blending of the components as there is a continuous cascade processing flow.

The main advantage of the multilayer polymeric product according to the present invention consists in the fact that, with a total quantity of PC ranging from 10 to 20% by weight with respect to the total, it has a temperature stability equal to that of a blend containing 50-60% by weight of PC with respect to the total.

The multilayer polymeric product according to the present invention allows both honeycomb and compact and corrugated structures to be produced.

Furthermore the multilayer polymeric product has the following additional advantages.

The different softening temperature creates an induced self-tension system which compensates the tensions created by the external pressure loads. As the two tension systems annul each other, they allow the sheet to resist higher loads with respect to a sheet of an equal thickness produced with single-layered extrusion. This gives a higher resistance to external loads.

As the outer layers have better temperature resistance characteristics, they preserve the material they enclose, increasing its temperature resistance due to the shield effect. The outer material, in fact, has a low thermal conductivity coefficient, i.e. it limits the passage of heat by contact (induction) and, thanks to the presence of an additive which reflects infrared rays, a lesser heating of the surface of the sheet is obtained. This produces a higher operating temperature.

As the outer layers have better temperature resistance characteristics, they preserve the material they enclose, increasing its temperature resistance due to the containment effect. The softening of the weaker central material would normally cause the viscous deformation of the sheet but this is prevented by the outer presence of a material which preserves its mechanical characteristics. This produces a higher operating material.

The surface temperature is kept lower thanks to the presence in extrusion of a layer of material with a high reflecting power which, by reflecting the solar radiation infrared component, allows two advantages to be obtained: 1) an increase in the operating temperature of the sheet as the performance increases with respect to direct exposure, 2) a decrease in the greenhouse effect inside the construction. This produces a higher operating temperature.

The protection offered by the outer material, having a greater resistance to hydrolysis, preserves the PET-based internal material from hydrolysis. This characteristic makes the product more long-lasting with respect to a single-layered product. This produces a longer duration.

The various refraction indexes of the different layers produce, as a result of the reflection of light rays, a better and greater light passage: better as there is the characteristic of uniformity and high diffusion, greater as the value is higher with respect to the light passage of the single-layered sheet. This produces a greater light passage.

In particular, the multilayer polymeric product according to the present invention, either with a honeycomb structure or with a compact and/or corrugated structure, can be used as a building material for greenhouses, extended building, skylights, canopies, horizontal padding, protection systems.

The honeycomb structure has a greater resistance and greater insulating properties.

In particular, the multilayer polymeric product according to the present invention preferably has a thickness varying from 4 to 16 mm in the case of honeycomb structures, a thickness varying from 0.5 to 5 mm in the case of solid structures and a thickness varying from 0.5 to 3 mm in the case of corrugated structures.

The internal layer of the multilayer polymeric product according to the present invention preferably has a thickness varying from 500 to 700 microns, the outer layer preferably has a thickness varying from 50 to 150 microns and the outer UV protection layer, when envisaged, preferably has a thickness varying from 20 to 60 microns.

The polyethylene terephthalate preferably has an intrinsic viscosity ranging from 0.83 to 1.20 dl/g, preferably close to 1 dl/g.

The polycarbonate (PC) can be any PC, i.e. linear or branched PC with an MFI value (melt flow index) - according to the regulation ASTM D 1238 - which varies from 4 to 12 g/10 min., preferably equal to 7 g/10 min; and an intrinsic viscosity varying from 1.2 to 1.4 dl/g, preferably 1.3 dl/g - according to the regulation ISO 1628-4.

Furthermore, the multilayer polymeric product according to the present invention can be coloured and can contain various additives such as protection additives against UV aging, infrared ray reflecting layers, various gradations of master-batches, depending on the particular characteristics of use of the end-product.

In particular, the multilayer polymeric product according to the present invention can variously contain mica powder and compatibilizing additives to obtain a heat reflecting effect and consequently lower the continuous operating temperature of the sheet.

The process for the production of the multilayer polymeric product according to the present invention allows the bleeding effect of the PC described above to be obtained specifically as a result of the particular thermal cycles envisaged in the four-layered coextrusion.

In the coextrusion, the "by-step" pressures within a range of 70 to 450 atm, cause a bleeding phenomenon between one layer and another, eliminating problems of delamination and improving the mechanical characteristics of the product.

Furthermore, the "by-step" thermal processes carried out within a range of 10 to 140°C, to which the product is subjected (the two outer layers are shaped below the softening temperature, whereas the internal layer is folded at a temperature higher than the softening point) cause tensioning in the two outer layers with a consequent increase in the mechanical resistance of the sheet.

In particular, the process according to the present invention envisages that all passages be carried out on line and in continuous.

Furthermore, the process according to the present invention envisages, in the coextrusion, that the pressures vary "by-step" within a range of 70 to 450 atm, generating bleeding and that the thermal processes be carried out "by-step" within a range of 10 to 140°C, causing tensioning between the layers.

In particular, the process according to the present invention can also envisage the coextrusion of a fourth outer layer consisting of a PC/PET blend with a UV-ray protection additive.

The characteristics and advantages of the multilayer polymeric product and process according to the present invention can be better understood from the following detailed and illustrative description referring to the following figures and examples.

figure 3 shows a plan view of a line for effecting the process according to the present invention in one of its embodiments;

figure 4 shows a raised partially sectional side view of a line for effecting the process according to the present invention in one of its embodiments.

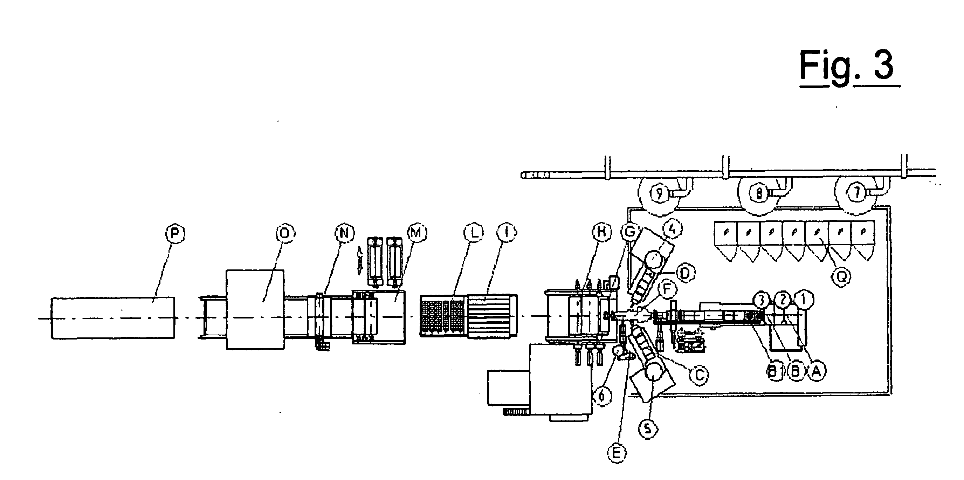

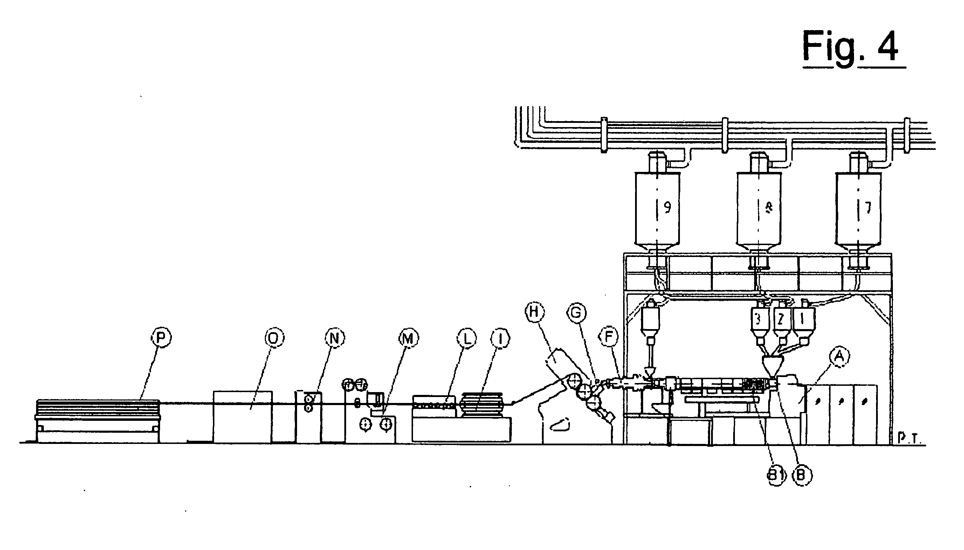

With reference to figures 3 and 4, these indicate with A a high-speed extruder coupled with screws with particular profiles, with a high mixing power at high pressure, with B a mixer with an extruder feeder; with C and D coextrusion extruders, with E a UV protection extruder, with F equipment for the homogenization of the various layers and relative compacting with a bleeding effect of the various polymers; with G a multilayer extrusion head, with H a calender with the possibility of regulating the operating temperature from 10 to 140°C; with I and L thermoforming systems in continuous with temperatures ranging from 10 to 140°C, with M, N, O and P standard accessories of the extrusion lines such as multiple pull systems, polythening sheet application, sheet cutting and stacking.

1, 2 and 3 indicate blending stations of the raw materials, 4, 5, 6, 7, 8 and 9 systems for the drying, dehumidification and regradation of the raw material or product.

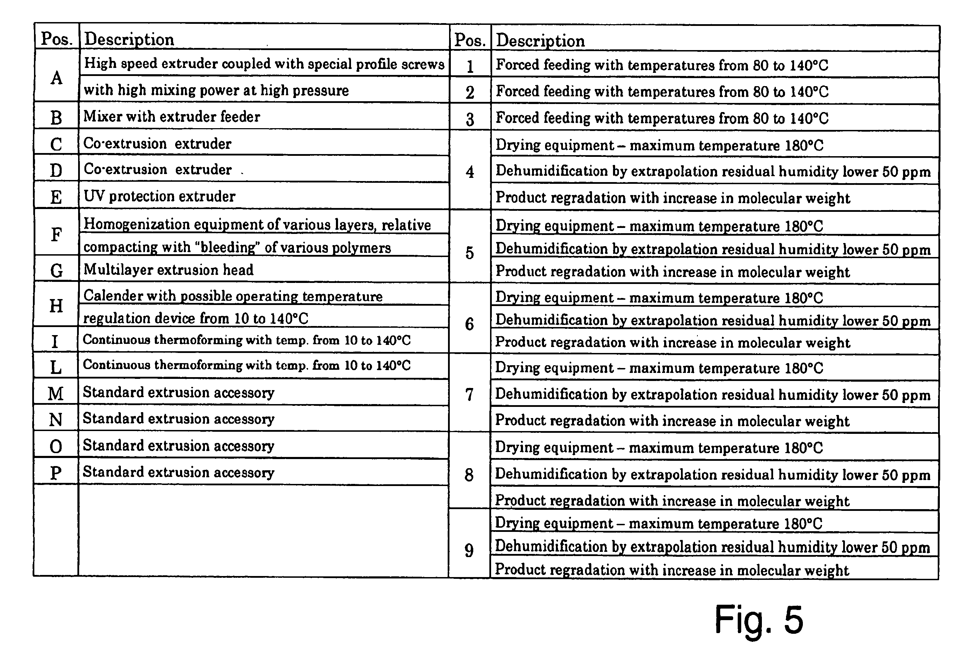

For greater clarity see the enclosed legend as figure 5.

In a particular embodiment, the process according to the present invention effected on line described above comprises the following phases. The polyethylene terephthalate copolymer (PET) (intrinsic viscosity index from 0.80 to 1.20 dl/g) with the presence of stabilizers and slip agents (such as phosphite/phenol and waxes), is subjected in the station 7 of figure 3 to a drying process until it reaches a residual humidity lower than 50 ppm. A regradation process is then initiated, which improves its intrinsic viscosity, ideally stabilized at 1.0 dl/g. The linear or branched polycarbonate (PC) (intrinsic viscosity index from 1.2 to 1.4 dl/g) with the presence of process additives (such as phosphite/phenol), is subjected in station 8 of figure 3 to a drying process. Drying of the PC/PET blend is then effected in station 9 of figure 3 at 180° with a UV-ray protection additive (benzotriazole).

In sections 1-2-3 of figure 3, the temperature passes from 80 to 140°C: at this point the mixing between PET and PC is effected.

The product is charged into the extruder starting from section "B". In the first section of the high mixing screw ("B1") the maximum pressure of 450 atm and the maximum temperature of 350°C are reached. In the remaining sections of the screw, before the station "F", the temperature is reduced to the normal operating temperature (250-300°C) and the pressure drops to 70-150 atm.

The coextrusion of the product coming from the main extruder takes place in the station "F" : the stations 4 and 5, relating to the outer layers, are fed by the apparatuses 7-8-9. The three flows converge in the centre of the coextruder "F" where they are coextruded and stabilized in the structure. The bleeding of the three layers is obtained thanks to the increasing pressures up to the maximum value.

In the extrusion head "G", the temperature falls to 230-270°C and the product is extruded. Finally in the calender "H" and in the thermoforming stations "I" and "L", the product is subjected to "by-step" thermal cycles within a range of 10 to 140°C through which the sheet is thermoformed and stabilized in its definite shape and characteristics. The stations M - N - O - P represent standard parts of the extrusion lines with pulling systems, polythening, cutting and stacking.

An applicative and non-limiting example of a product according to the present invention is provided hereunder, in particular an example of the production of a compact corrugated sheet.

### Example

A compact corrugated sheet was produced with the method described above:

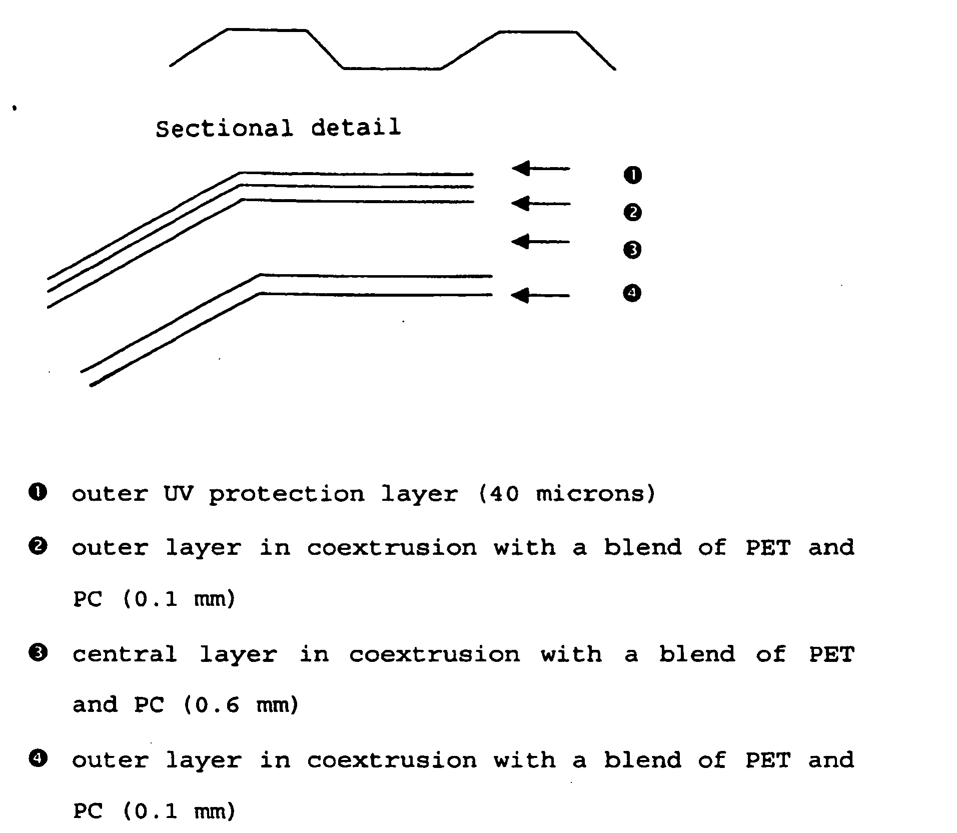

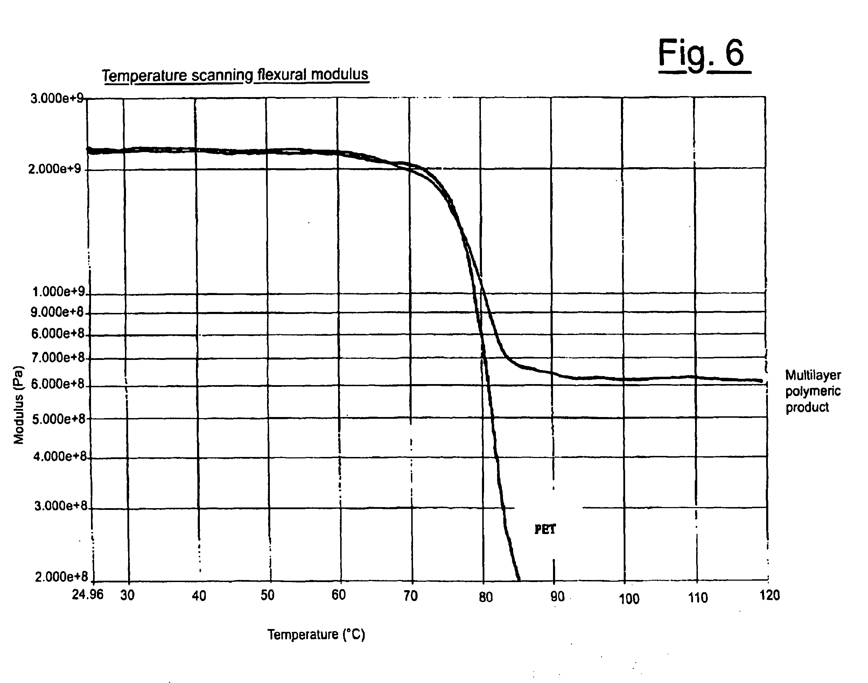

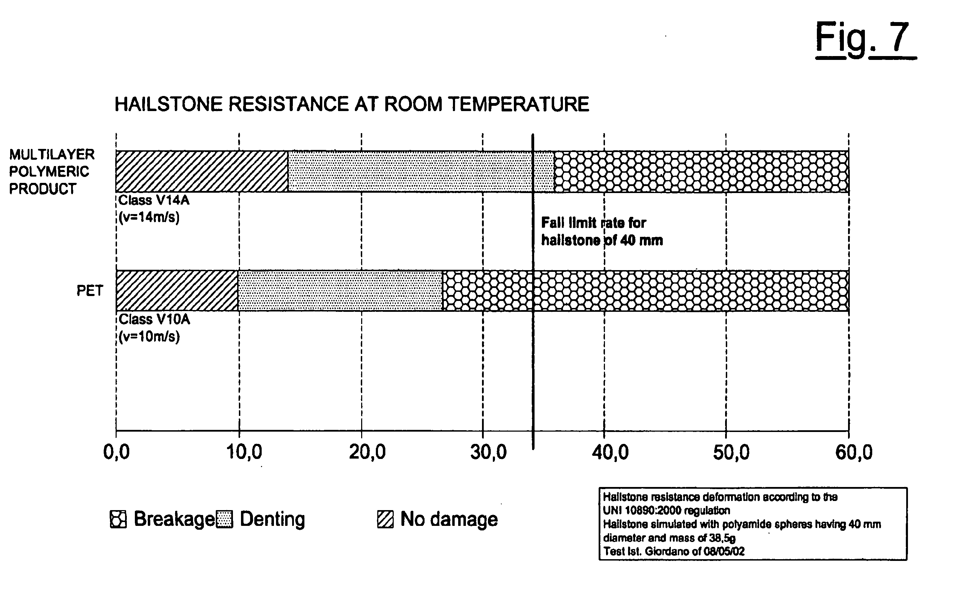

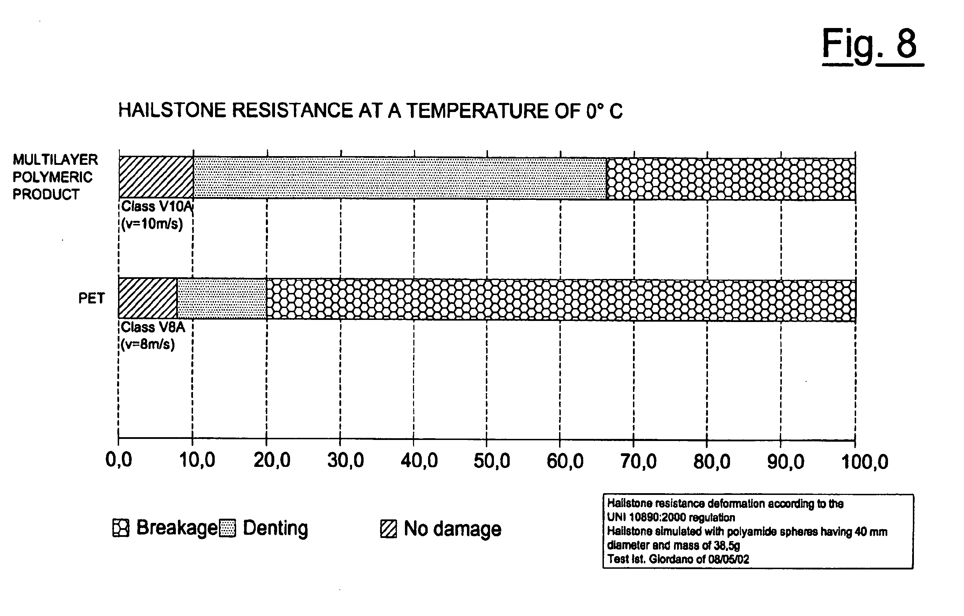

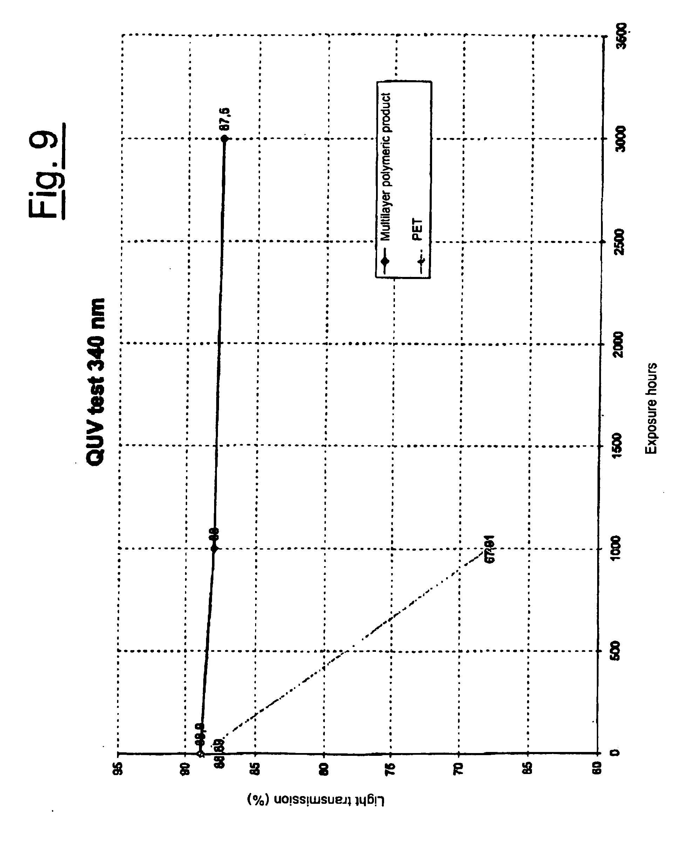

Some performances of the above multilayer polymeric product according to the present invention are specified below:
a) Operating temperature
   The following values are obtained with a dynamo-mechanical analysis test, method DMA 7 (free point bending) carried out for a comparison with PET and with the multilayer polymeric product according to the present invention: for PET, once the intrinsic TG of PET has been exceeded (78°C), the modulus falls and the values are no longer measurable; for the multilayer polymeric product according to the present invention, even after exceeding the intrinsic TG of PET (78°C), the modulus remains at around a value of 600 MPA over 100°C (see Figure 6).
b) Mechanical resistance:
   The following values are obtained with a hailstone resistance test at room temperature and at 0°C, carried out according to the regulation UNI 10890/2000 on sheets of PET and on the multilayer polymeric product according to the present invention:
   i) at room temperature (see Figure 7)
      - for PET, breakage over 27 m/s = Group V10A;
      - for the multilayer polymeric product according to the present invention: no breakage over 36 m/second = Group V14A.
   ii) at 0°C (see Figure 8)
      - for PET, breakage over 20 m/s = Group V8A;
      - for the multilayer polymeric product according to the present invention: breakage over 65 m/second = Group V10A.
c) Resistance to hydrolysis:
   The following values (see Figure 9) are obtained with the QUV test 340 nm (cycle of 20 hours at 60°C + 4 hours condensation at 50°C) to detect the light transmission after 1000 hours of aging, carried out for comparison, on sheets of PET and on the multilayer polymeric product according to the present invention:
   - for PET: light transmission before aging: 88.89; to be compared with the value of 67.91 after exposure of 1000 hours, following hydrolysis.
   - for the multilayer polymeric product: light transmission before aging: 88.9; to be compared with the value of 87.5 after exposure of 3000 hours.

## Claims

1. A multilayer polymeric product which consists of a co-extruded internal central layer of polyethylene terephthalate (PET) copolymer, in a quantity ranging from 80 to 90% by weight with respect to the total weight of the internal layer, mixed with polycarbonate (PC), in a quantity ranging from 10 to 20% by weight with respect to the total weight of the layer, and outer, side layers, of a blend of PET, in a quantity ranging from 15 to 25% by weight with respect to the total weight of the outer layers, and PC, in a quantity ranging from 75 to 85% by weight with respect to the total weight of said outer layers.

2. The multilayer polymeric product according to claim 1, **characterized in that** the overall quantity of PC is equal to 10-20% of the total weight of the product.

3. The multilayer polymeric product according to claim 1, **characterized in that** the central internal layer is made of PET, in a quantity equal to 90% by weight with respect to the total weight of said layer, in a blend with PC, in a quantity equal to 10% by weight with respect to the total weight of said layer, and the two outer side layers, are a blend of PET, in a quantity equal to 20% by weight with respect to the total weight of the two outer layers, and PC, in a quantity equal to 80% by weight with respect to the total weight of said layers.

4. The multilayer polymeric product according to claim 1, **characterized in that** the internal layer has a thickness of five to seven times the thickness of the outer layer, preferably 6 times.

5. The multilayer polymeric product according to claim 1, **characterized in that** it has a thickness ranging from 4 to 16 mm in the case of honeycomb structures, a thickness ranging from 0.5 to 5 mm in the case of solid structures and a thickness ranging from 0.5 to 3 mm in the case of corrugated structures.

6. The multilayer polymeric product according to claim 1, **characterized in that** the internal layer has a thickness varying from 500 to 700 microns.

7. The multilayer polymeric product according to claim 1, **characterized in that** the two outer layers have a thickness varying from 50 to 150 microns.

8. The multilayer polymeric product according to claim 1, **characterized in that** it has 4 layers: a central internal layer, two outer side layers, and an outer UV protection layer.

9. The multilayer polymeric product according to claim 8, **characterized in that** the outer UV protection layer has a thickness varying from 20 to 60 microns.

10. The multilayer polymeric product according to claim 1, **characterized in that** the polyethylene terephthalate has an intrinsic viscosity ranging from 0.83 to 1.20 dl/g, preferably equal to 1 dl/g.

11. The multilayer polymeric product according to claim 1, **characterized in that** the PC is a linear or branched PC.

12. The multilayer polymeric product according to claim 1, **characterized in that** the PC has an intrinsic viscosity ranging from 1.2 to 1.4 dl/g, preferably equal to 1.3 dl/g.

13. The multilayer polymeric product according to claim 1, **characterized in that** it is coloured and/or contains various additives such as protection additives against UV aging, infrared-ray reflecting layers, master batches of various gradations.

14. The multilayer polymeric product according to claim 1, **characterized in that** it contains various additives, in particular mica powder and compatibilizing additives.

15. The multilayer polymeric product according to claim 1, **characterized in that** it has a honeycomb structure, a compact structure or a corrugated structure.

16. The multilayer polymeric product according to claim 1, **characterized in that** the outer layer has a greater resistance to hydrolysis with respect to the inner layer.

17. The multilayer polymeric product according to claim 1, **characterized in that** the various layers have different refraction indexes.

18. A process for the production of a multilayer polymeric product which consists in a coextruded internal central layer of polyethylene terephthalate (PET) copolymer, in a quantity ranging from 80 to 90% by weight with respect to the total weight of the internal layer, mixed with polycarbonate (PC), in a quantity ranging from 10 to 20% by weight with respect to the total weight of the layer, and outer, side layers, of a blend of PET, in a quantity ranging from 15 to 25% by weight with respect to the total weight of the outer layers, and PC, in a quantity ranging from 75 to 85% by weight with respect to the total weight of said outer layers, said process comprising the following phases:
i) the PET, possibly containing additives, is subjected to drying and regradation;
ii) the PC, possibly containing additives, is subjected to drying;
iii) the PC/PET blend, possibly containing additives, is subjected to drying;
iv) PET and PC are subjected to blending at a temperature ranging from 80 to 140°C;
v) the blended product is charged into the main extruder and extrusion is effected of the internal layer at a pressure ranging from 70 to 450 atm and a temperature ranging from 250 to 350°C;
vi) the blend coming from phase iii) is extruded to give the two outer layers;
vii) the three layers coming from phases v) and vi) converge in a coextruder where they are coextruded at an increasing pressure from 70 to 450 atm and a temperature varying from 230 to 270°C and then stabilized;
viii) the multilayer product coming from phase vii) is subjected to calendering and thermoforming at by-step thermal cycles within a range of 10 to 140°C.

19. The process according to claim 18, **characterized in that** all the steps are effected on line and in continuous.

20. The process according to claim 18, **characterized in that** in the coextrusion, the pressure vary "by-step" within a range of 70 to 450 atm, causing bleeding.

21. The process according to claim 18, **characterized in that** the thermal processes are carried out "by-step" within a range of 10 to 140°C, causing tensioning between the layers.

22. The process according to claim 18, **characterized in that** it comprises the coextrusion of a fourth outer layer consisting of a blend of PC/PET with a UV-ray protection additive.

23. Use as building material of a multilayer polymeric product which consists in a coextruded internal central layer of polyethylene terephthalate (PET) copolymer, in a quantity ranging from 80 to 90% by weight with respect to the total weight of the internal layer, mixed with polycarbonate (PC), in a quantity ranging from 10 to 20% by weight with respect to the total weight of the layer, and outer, side layers, of a blend of PET, in a quantity ranging from 15 to 25% by weight with respect to the total weight of the outer layers, and PC, in a quantity ranging from 75 to 85% by weight with respect to the total weight of said outer layers.

24. The use according to claim 23, wherein the multilayer polymeric product with a honeycomb structure or with a compact or corrugated structure is used as a building material for greenhouses, extended building, skylights, canopies, horizontal padding, protection systems.

## Patentansprüche

1. Mehrschichtpolymerprodukt, welches aus einer koextrudierten zentralen Innenschicht aus Polyethylenterephthalat (PET-)Copolymer in einer Menge in einem Bereich zwischen 80 und 90 Gew.-% bezogen auf das Gesamtgewicht der Innenschicht vermischt mit Polycarbonat (PC) in einer Menge in einem Bereich zwischen 10 und 20 Gew.-% bezogen auf das Gesamtgewicht der Schicht und aus Außenseitenschichten aus einer Mischung aus PET in einer Menge in einem Bereich zwischen 15 und 25 Gew.-% bezogen auf das Gesamtgewicht der Außenschichten und aus PC in einer Menge in einem Bereich zwischen 75 und 85 Gew.-% bezogen auf das Gesamtgewicht der Außenschichten besteht.

2. Mehrschichtpolymerprodukt nach Anspruch 1, **dadurch gekennzeichnet, dass** die Gesamtmenge von PC gleich 10 bis 20 % des Gesamtgewichts des Produktes beträgt.

3. Mehrschichtpolymerprodukt nach Anspruch 1, **dadurch gekennzeichnet, dass** die zentrale Innenschicht aus PET in einer Menge von gleich 90 Gew.-% bezogen auf das Gesamtgewicht der Schicht in einer Mischung mit PC in einer Menge von gleich 10 Gew.-% bezogen auf das Gesamtgewicht der Schicht gefertigt ist, und, dass die beiden Außenseitenschichten eine Mischung aus PET in einer Menge von gleich 20 Gew.-% bezogen auf das Gesamtgewicht der beiden Außenschichten und aus PC in einer Menge von gleich 80 Gew.-% bezogen auf das Gesamtgewicht der Schichten sind.

4. Mehrschichtpolymerprodukt nach Anspruch 1, **dadurch gekennzeichnet, dass** die Innenschicht eine Dicke von 5-mal bis 7-mal der Dicke der Außenschicht und vorzugsweise von 6-mal der Dicke der Außenschicht aufweist.

5. Mehrschichtpolymerprodukt nach Anspruch 1, **dadurch gekennzeichnet, dass** dieses in dem Fall von Honigwabenstrukturen eine Dicke in einem Bereich zwischen 4 und 16 mm, in dem Fall von Massivstrukturen eine Dicke in einem Bereich zwischen 0,5 und 5 mm und in dem Fall von gewellten Strukturen eine Dicke in einem Bereich zwischen 0,5 und 3 mm aufweist.

6. Mehrschichtpolymerprodukt nach Anspruch 1, **dadurch gekennzeichnet, dass** die Innenschicht eine Dicke aufweist, welche zwischen 500 und 700 µm variiert.

7. Mehrschichtpolymerprodukt nach Anspruch 1, **dadurch gekennzeichnet, dass** die beiden Außenschichten eine Dicke aufweisen, welche zwischen 50 und 150 µm variiert.

8. Mehrschichtpolymerprodukt nach Anspruch 1, **dadurch gekennzeichnet, dass** diese vier Schichten aufweist: eine zentrale Innenschicht, zwei Außenseitenschichten und eine äußere UV-Schutzschicht.

9. Mehrschichtpolymerprodukt nach Anspruch 8, **dadurch gekennzeichnet, dass** die äußere UV-Schutzschicht eine Dicke aufweist, welche zwischen 20 und 60 µm variiert.

10. Mehrschichtpolymerprodukt nach Anspruch 1, **dadurch gekennzeichnet, dass** das Polyethylenterephthalat eine intrinsische Viskosität in einem Bereich zwischen 0,83 und 1,20 dl/g und vorzugsweise von gleich 1 dl/g aufweist.

11. Mehrschichtpolymerprodukt nach Anspruch 1, **dadurch gekennzeichnet, dass** das PC ein lineares oder verzweigtes PC ist.

12. Mehrschichtpolymerprodukt nach Anspruch 1, **dadurch gekennzeichnet, dass** das PC eine intrinsische Viskosität in einem Bereich zwischen 1,2 und 1,4 dl/g und vorzugsweise von gleich 1,3 dl/g aufweist.

13. Mehrschichtpolymerprodukt nach Anspruch 1, **dadurch gekennzeichnet, dass** dieses gefärbt ist und/oder verschiedene Additive enthält, wie beispielsweise Schutzadditive gegen UV-Alterung, Infrarot reflektierende Schichten, Vormischungen mit verschiedenen Gradierungen.

14. Mehrschichtpolymerprodukt nach Anspruch 1, **dadurch gekennzeichnet, dass** dieses verschiedene Additive, insbesondere Glimmerpulver und kompatibilisierende Additive, enthält.

15. Mehrschichtpolymerprodukt nach Anspruch 1, **dadurch gekennzeichnet, dass** dieses eine Honigwabenstruktur, eine kompakte Struktur oder eine gewellte Struktur aufweist.

16. Mehrschichtpolymerprodukt nach Anspruch 1, **dadurch gekennzeichnet, dass** die Außenschicht im Vergleich zu der Innenschicht eine größere Beständigkeit gegenüber Hydrolyse aufweist.

17. Mehrschichtpolymerprodukt nach Anspruch 1, **dadurch gekennzeichnet, dass** die verschiedenen Schichten unterschiedliche Brechungsindizes aufweisen.

18. Verfahren zur Herstellung eines Mehrschichtpolymerprodukts, welches aus einer koextrudierten zentralen Innenschicht aus Polyethylenterephthalat (PET-)Copolymer in einer Menge in einem Bereich zwischen 80 und 90 Gew.-% bezogen auf das Gesamtgewicht der Innenschicht vermischt mit Polycarbonat (PC) in einer Menge in einem Bereich zwischen 10 und 20 Gew.-% bezogen auf das Gesamtgewicht der Schicht besteht und aus Außenseitenschichten aus einer Mischung aus PET in einer Menge in einem Bereich zwischen 15 und 25 Gew.-% bezogen auf das Gesamtgewicht der Außenschichten und aus PC in einer Menge in einem Bereich zwischen 75 und 85 Gew.-% bezogen auf das Gesamtgewicht der Außenschichten besteht, wobei das Verfahren die nachfolgenden Schritte umfasst:
i) das PET, welches gegebenenfalls Additive enthält, wird einer Trocknung und einer Regradation unterworfen,
ii) das PC, welches gegebenenfalls Additive enthält, wird einer Trocknung unterworfen,
iii) die PC/PET-Mischung, welche gegebenenfalls Additive enthält, wird einer Trocknung unterworfen,
iv) PET und PC werden bei einer Temperatur in einem Bereich zwischen 80 und 140°C einer Vermischung unterworfen,
v) das vermischte Produkt wird in einen Hauptextruder eingefüllt und es wird eine Extrusion der Innenschicht bei einem Druck in einem Bereich zwischen 70 und 450 atm und bei einer Temperatur in einem Bereich von 250 bis 350°C durchgeführt,
vi) die aus dem Schritt iii) kommende Mischung wird extrudiert, um die beiden Außenschichten zu ergeben,
vii) die drei aus den Schritten v) und vi) kommenden Schichten werden in einen Koextruder überführt, wo diese bei einem ansteigenden Druck von 70 bis 450 atm und bei einer Temperatur in einem Bereich zwischen 230 und 270°C koextrudiert und dann stabilisiert werden,
viii) das Mehrschichtprodukt, welches aus dem Schritt vii) kommt, wird einer Kalendrierung und einem Thermoformen bei schrittweisen thermischen Zyklen in einem Bereich zwischen 10 und 140°C unterworfen.

19. Verfahren nach Anspruch 18, **dadurch gekennzeichnet, dass** alle Schritte online und kontinuierlich durchgeführt werden.

20. Verfahren nach Anspruch 18, **dadurch gekennzeichnet, dass** der Druck bei der Koextrusion "schrittweise" innerhalb eines Bereiches zwischen 70 und 450 atm variiert wird, was ein Ausbluten verursacht.

21. Verfahren nach Anspruch 18, **dadurch gekennzeichnet, dass** die thermischen Schritte "schrittweise" innerhalb eines Bereiches zwischen 10 und 140°C durchgeführt werden, was zwischen den Schichten eine Spannung verursacht.

22. Verfahren nach Anspruch 18, **dadurch gekennzeichnet, dass** dieses die Koextrusion einer vierten Außenschicht umfasst, welche aus einer Mischung aus PC/PET mit einem Schutzadditiv gegen UV-Strahlen besteht.

23. Verwendung eines Mehrschichtpolymerprodukts, welches aus einer koextrudierten zentralen Innenschicht aus Polyethylenterephthalat (PET-)Copolymer in einer Menge in einem Bereich zwischen 80 und 90 Gew.-% bezogen auf das Gesamtgewicht der Innenschicht vermischt mit Polycarbonat (PC) in einer Menge in einem Bereich zwischen 10 und 20 Gew.-% bezogen auf das Gesamtgewicht der Schicht und aus Außenseitenschichten aus einer Mischung aus PET in einer Menge in einem Bereich zwischen 15 und 25 Gew.-% bezogen auf das Gesamtgewicht der Außenschichten und aus PC in einer Menge zwischen 75 und 85 Gew.-% bezogen auf das Gesamtgewicht der Außenschichten besteht, als Baumaterial.

24. Verwendung nach Anspruch 23, wobei ein Mehrschichtpolymerprodukt mit einer Honigwabenstruktur oder mit einer kompakten oder gewellten Struktur als Baumaterial für Gewächshäuser, für aufgestockte Gebäude, für Dachfenster, für Schutzdächer, für horizontale Polstermaterialen oder für Schutzsysteme eingesetzt wird.

## Revendications

1. Produit polymère multicouche qui consiste en une couche centrale interne co-extrudée de copolymère de polyéthylène téréphtalate (PET), en une quantité de l'ordre de 80 à 90 % en poids par rapport au poids total de la couche interne, mélangé avec un polycarbonate (PC) en une quantité de l'ordre de 10 à 20 % en poids par rapport au poids total de la couche, et en couches latérales externes, d'un mélange de PET, en une quantité de l'ordre de 15 à 25 % en poids par rapport au poids total des couches externes et un PC, en une quantité de l'ordre de 75 à 85 % en poids par rapport au poids total desdites couches externes.

2. Produit polymère multicouche selon la revendication 1, **caractérisé en ce que** la quantité globale de PC est égale à 10-20 % du poids total du produit.

3. Produit polymère multicouche selon la revendication 1, **caractérisé en ce que** la couche interne centrale est constituée de PET, en une quantité égale à 90 % en poids par rapport au poids total de ladite couche, dans un mélange avec un PC, en une quantité égale à 10 % en poids par rapport au poids total de ladite couche et les deux couches latérales externes sont un mélange de PET, en une quantité égale à 20 % en poids par rapport au poids total des deux couches externes et de PC, en une quantité égale à 80 % en poids par rapport au poids total desdites couches.

4. Produit polymère multicouche selon la revendication 1, **caractérisé en ce que** la couche interne a une épaisseur de cinq à sept fois l'épaisseur de la couche externe, de préférence, de six fois celle-ci.

5. Produit polymère multicouche selon la revendication 1, **caractérisé en ce qu'**il a une épaisseur de l'ordre de 4 à 16 mm dans le cas de structures en nid d'abeilles, une épaisseur de l'ordre de 0,5 à 5 mm dans le cas de structures solides et une épaisseur de l'ordre de 0,5 à 3 mm dans le cas de structures ondulées.

6. Produit polymère multicouche selon la revendication 1, **caractérisé en ce que** la couche interne a une épaisseur variant de 500 à 700 microns.

7. Produit polymère multicouche selon la revendication 1, **caractérisée en ce que** les deux couches externes ont une épaisseur variant de 50 à 150 microns.

8. Produit polymère multicouche selon la revendication 1, **caractérisé en ce qu'**il présente 4 couches : une couche interne centrale, deux couches latérales externes et une couche externe de protection contre les UV.

9. Produit polymère multicouche selon la revendication 8, **caractérisé en ce que** la couche externe de protection contre les UV a une épaisseur variant de 20 à 60 microns.

10. Produit polymère multicouche selon la revendication 1, **caractérisé en ce que** le polyéthylène téréphtalate a une viscosité intrinsèque de l'ordre de 0,83 à 1,20 dl/g, de préférence égale à 1 dl/g.

11. Produit polymère multicouche selon la revendication 1, **caractérisé en ce que** le PC est un PC linéaire ou ramifié.

12. Produit polymère multicouche selon la revendication 1, **caractérisé en ce que** le PC a une viscosité intrinsèque de 1,2 à 1,4 dl/g, de préférence égale à 1,3 dl/g.

13. Produit polymère multicouche selon la revendication 1, **caractérisé en ce qu'**il est coloré et/ou contient divers additifs tels que des additifs protecteurs contre le vieillissement par les UV, des couches réfléchissant les rayons infrarouges, des mélanges maîtres de diverses gradations.

14. Produit polymère multicouche selon la revendication 1, **caractérisé en ce qu'**il contient divers additifs, en particulier de la poudre de mica et des additifs de compatibilité.

15. Produit polymère multicouche selon la revendication 1, **caractérisé en ce qu'**il présente une structure en nid d'abeilles, une structure compacte ou une structure ondulée.

16. Produit polymère multicouche selon la revendication 1, **caractérisé en ce que** la couche externe a une résistance supérieure à l'hydrolyse par rapport à la couche interne.

17. Produit polymère multicouche selon la revendication 1, **caractérisé en ce que** les diverses couches ont différents indices de réfraction.

18. Procédé de production d'un produit polymère multicouche qui consiste en une couche centrale interne co-extrudée de copolymère de polyéthylène téréphtalate (PET), en une quantité de l'ordre de 80 à 90 % en poids par rapport au poids total de la couche interne, mélangé avec un polycarbonate (PC) en une quantité de l'ordre de 10 à 20 % en poids par rapport au poids total de la couche, et en couches latérales externes, d'un mélange de PET, en une quantité de l'ordre de 15 à 25 % en poids par rapport au poids total des couches externes et un PC, en une quantité de l'ordre de 75 à 85 % en poids par rapport au poids total desdites couches externes, ledit procédé comprenant les phases suivantes :
i) le PET, contenant éventuellement des additifs, est soumis à un séchage et à une nouvelle gradation ;
ii) le PC contenant éventuellement des additifs, est soumis au séchage ;
iii) le mélange de PC/PET, contenant éventuellement des additifs, est soumis au séchage ;
iv) le PET et le PC sont soumis à un mélange à une température de l'ordre de 80 à 140°C ;
v) le produit mélangé est chargé dans l'extrudeuse principale et l'extrusion de la couche interne est effectuée à une pression de l'ordre de 70 à 450 atm et à une température de l'ordre de 250 à 350° C ;
vi) le mélange issu de la phase iii) est extrudé pour donner les deux couches externes ;
vii) les trois couches issues des phases v) et vi) convergent dans une co-extrudeuse où elles sont co-extrudées à une pression croissante de 70 à 450 atm et à une température variant de 230 à 270° C puis sont stabilisées ;
viii) le produit multicouche issu de la phase vii) est soumis à un calandrage et un thermoformage à des cycles thermiques par niveau dans une plage de 10 à 140° C.

19. Procédé selon la revendication 18, **caractérisé en ce que** toutes les étapes sont effectuées en ligne et en continu.

20. Procédé selon la revendication 18, **caractérisé en ce que** dans la co-extrusion, la pression varie "par niveau" dans une plage de 70 à 450 atm, entraînant un ressuage.

21. Procédé selon la revendication 18, **caractérisé en ce que** les processus thermiques sont réalisés "par niveau" dans une plage de 10 à 140° C, entraînant une tension entre les couches.

22. Procédé selon la revendication 18, **caractérisé en ce qu'**il comprend la co-extrusion d'une quatrième couche externe constituée d'un mélange de PC/PET avec un additif de protection contre les rayons UV.

23. Utilisation comme matériau de construction d'un produit polymère multicouche qui consiste en une couche centrale interne co-extrudée de copolymère de polyéthylène téréphtalate (PET), en une quantité de l'ordre de 80 à 90 % en poids par rapport au poids total de la couche interne, mélangé avec un polycarbonate (PC) en une quantité de l'ordre de 10 à 20 % en poids par rapport au poids total de la couche, et en couches latérales externes, d'un mélange de PET, en une quantité de l'ordre de 15 à 25 % en poids par rapport au poids total des couches externes et un PC, en une quantité de l'ordre de 75 à 85 % en poids par rapport au poids total desdites couches externes.

24. Utilisation selon la revendication 23, dans laquelle le produit polymère multicouche présentant une structure en nid d'abeilles ou une structure compacte ou ondulée est utilisé comme matériau de construction de serres, pour l'agrandissement de bâtiments, de claires-voies, d'auvents, de rembourrage horizontal, de systèmes de protection.
